# EUROPÄISCHE PATENTANMELDUNG

(11) **EP 3 544 154 A1**
(43) Veröffentlichungstag der Anmeldung: **25.09.2019**
(21) Anmeldenummer: 18162534.4
(22) Anmeldetag: 19.03.2018
(51) Int. Cl.: H02K 3/487, H02K 17/16

(54) **DYNAMOELEKTRISCHE ROTATORISCHE MASCHINE MIT NUTABDECKUNGEN**

(71) Anmelder: Siemens Aktiengesellschaft, 80333 München (DE)
(72) Erfinder: Brand, Jens, 90459 Nürnberg (DE); Grünthaler, Andreas, 90409 Nürnberg (DE); Krebs, Mario, 91171 Greding-Hausen (DE)

(57) **Zusammenfassung**

Die Erfindung betrifft eine dynamoelektrische rotatorische Maschine (1) mit
- einem Stator (2), der ein in Nuten (8) angeordnetes Wicklungssystem (5) aufweist, dass an den Stirnseiten eines Blechpakets (3) des Stators (2) jeweils einen Wickelkopf (7) aufweist,
- einen Rotor (12) mit einem Kurzschlusskäfig, der mittels elektromagnetischer Wechselwirkung über einen Luftspalt (10) mit dem bestromten Wicklungssystem (5) des Stators (2) diesen in Drehung um eine Achse (17) versetzt,
- einer Nutabdeckung (9) zwischen Wicklungssystem (5) und Luftspalt (10), die axial über die Stirnseiten des Stators (2) ragt und in diesem Bereich axial außerhalb dieser Stirnseiten dort in die benachbarten Nutabdeckungen (9) nahezu stufenlos übergeht.

## Beschreibung

Die Erfindung betrifft eine dynamoelektrische rotatorische Maschine mit Nutabdeckungen.

Vor allem bei luftgekühlten rotatorischen elektrischen Maschinen wie auch durchzugsbelüfteten elektrischen rotatorischen elektrischen Maschinen ist häufig durch Luftströmung verursachter Lärm eine kritische Größe. Eine der typischen Ursachen für die Schallentstehung ist im Aktivteil der Maschinen also im Stator und Rotor zu finden.

So bildet insbesondere bei Asynchronmaschinen mit Käfigläufer, bei denen der Kurzschlussring nicht direkt am Rotorblech aufliegt dieser Abstand eine besonders kritische Stelle. Dort kommt es zu aeroakustischer Interaktion zwischen den Spulen des Stators und Stäben des Rotors. Durch die schnell an den stehenden Spulen vorbeirotierenden Stäbe des Rotors kommt es zu Druckschwankungen, die zu tonalen Geräuschen führen.

Ausgehend davon liegt der Erfindung die Aufgabe zugrunde einen Stator bzw. eine Stator-Rotor-Anordnung einer dynamoelektrischen Maschine zu schaffen, die diese Schallemissionen vermeidet.

Die Lösung der gestellten Aufgabe gelingt durch eine dynamoelektrische rotatorische Maschine mit
- einem Stator, der ein in Nuten angeordnetes Wicklungssystem aufweist, dass an den Stirnseiten eines Blechpakets des Stators jeweils einen Wickelkopf aufweist,
- einen Rotor mit einem Kurzschlusskäfig, der mittels elektromagnetischer Wechselwirkung über einen Luftspalt mit dem bestromten Wicklungssystem des Stators diesen in Drehung um eine Achse versetzt,
- einer Nutabdeckung zwischen Wicklungssystem und Luftspalt, die axial über die Stirnseiten des Stators ragt und in diesem Bereich axial außerhalb dieser Stirnseiten dort in die benachbarten Nutabdeckungen nahezu stufenlos übergeht.

Durch die erfindungsgemäße Verlängerung und Verbreiterung der Nutabdeckungen an den Stirnseiten des Stators wird nunmehr der Zwischenraum der Spulen, in Umfangsrichtung betrachtet abgedeckt. Es entsteht somit eine nahezu zylindrische Fläche an der Spuleninnenseite, also der dem Luftspalt zugewandten Seite des Wicklungssystems, die auch dem Kurzschlusskäfig des Rotors zugewandt ist. Durch diesen Aufbau des Stators und damit der dynamoelektrischen Maschine werden die aeroakustischen Rotor-Stator-Interaktionen vermieden und die dadurch verursachten Geräusche stark verringert.

Bei einer vergleichsweise starren Ausführung der Nutabdeckungen sind nunmehr pro Nut zwei im Wesentlichen T-förmige oder L-förmige Nutabdeckungen vorzusehen, die jeweils von ihren Stirnseiten her in die Nut eingeschoben werden und somit der verbreitete Teil an den Stirnseiten verbleibt. Um auch Kriechströme etc. oder andere parasitäre Vorgänge zu vermeiden, sind dabei die Nutabdeckungen an ihrer Stoßkante in der Nut überlappend ausgeführt.

Die Erfindung sowie weitere vorteilhafte Ausgestaltungen der Erfindung werden anhand eines prinzipiell dargestellten Ausführungsbeispiels näher erläutert. Darin zeigt:
- FIG 1: zeigt in einer Seitenteilansicht eine Stator-Rotor-Anordnung,
- FIG 2: einen Teilausschnitt eines Längsschnitts einer dynamoelektrischen Maschine und
- FIG 3 und 4: jeweils eine Seitenteilansicht einer Stator-Rotor-Anordnung,
- FIG 5 bis 8: Ausgestaltungen von Nutabdeckungen.

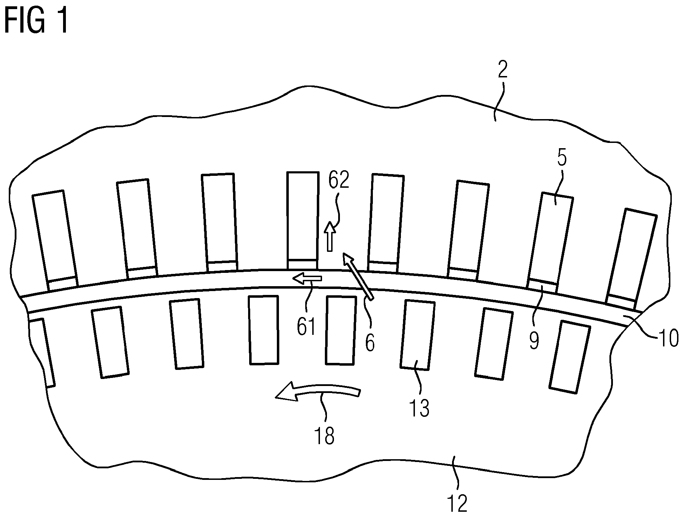

FIG 1 zeigt in einer Seitenteilansicht einen Stator 2 einer dynamoelektrischen Maschine 1, insbesondere einer Asynchronmaschine und einen Rotor 12, wobei der Rotor 12 Leiterstäbe 13 aufweist, die in geschlossenen Rotornuten oder halb offenen Rotornuten zu einem Luftspalt 10 der dynamoelektrischen rotatorischen Maschine 1 weisen. Im Stator 2 ist ein Wicklungssystem 5 angeordnet, dass aus Zahnspulen, einem Einschichtwicklungssystem oder mehrschichtigen Wicklungssystem aufgebaut sein kann. Entscheidend dabei ist, dass die zum Luftspalt 10 der dynamoelektrischen Maschine 1 weisenden Nuten 8 einen Nutschlitz einer teilweise geöffneten oder offenen Nut 8 aufweisen, der durch eine Nutabdeckung 9 geschlossen ist.

Nach dem in FIG 1 beschriebenen Aufbau gemäß dem Stand der Technik schließen die Nutabdeckungen 9 den Nutschlitz und damit die Nut 8 des Stators 2 in Richtung Luftspalt 10 ab.

Es ergibt sich durch eine Drehung 18 des Rotors 12 eine Luftströmung 6, die sich in eine radiale Komponente 62 und eine tangentiale Komponente 61 aufteilt. Die radiale Komponente 62 verläuft an den Stirnseiten des Stators 2. Die tangentiale Luftströmung 61 verläuft im Luftspalt 10 bzw. entlang einem Kurzschlussring 14 des Kurzschlusskäfigs. Die radiale Komponente 62 der Luftströmung 6 verursacht nunmehr im Bereich der Austritte des Wicklungssystems 5 an den Stirnseiten des Stators 2 Geräusche.

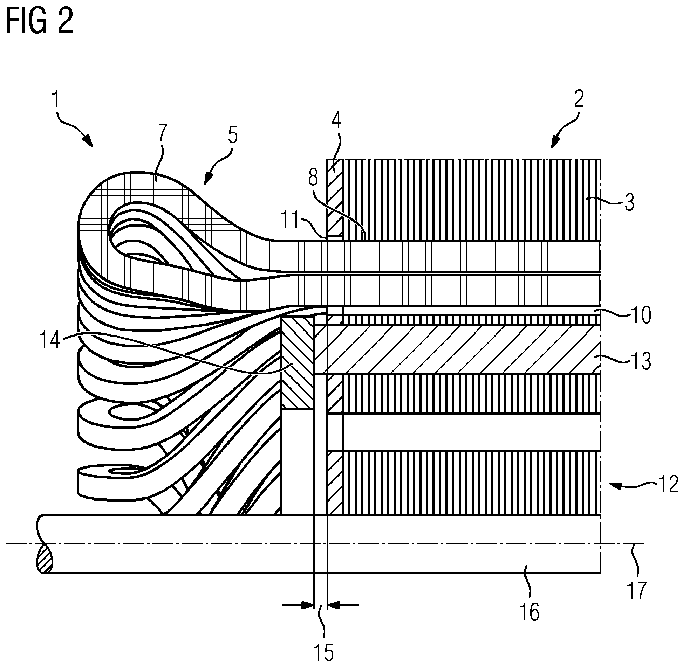

Dieser axiale Abstand 15 zwischen Kurzschlussring 14 und der Stirnseite des Rotors 12, der zu der Luftströmung 6 im Bereich des Wicklungssystems 5 führt und damit zu den Schallemissionen führt, wird nunmehr gemäß FIG 2 durch erfindungsgemäße Nutabdeckungen 9 in der Entfaltung seiner radialen Komponente 62 behindert. Die erfindungsgemäße Nutabdeckung 9 weist einen Nutbereich 22 auf, der die Nut 8 abdeckt und einen Nutaußenbereich 23 auf, der sich an der Stirnseite des Stators 2 befindet.

Dabei sind nunmehr die Nutabdeckungen 9 vor allem im Bereich zwischen der Stirnseite des Stators 2 und der axialen Höhe des Kurzschlussrings 14 des Rotors 2 angeordnet. Der Nutaußenbereich 23 weist vorteilhafterweise eine axiale Mindesterstreckung auf, also von der Stirnseite des Stators 2 bis zumindest auf Höhe der Innenkante des Kurzschlussrings 14.

Die Blechpakete von Rotor 12 als auch Stator 2 sind im vorliegenden Fall durch Druckscheiben 4 paketiert.

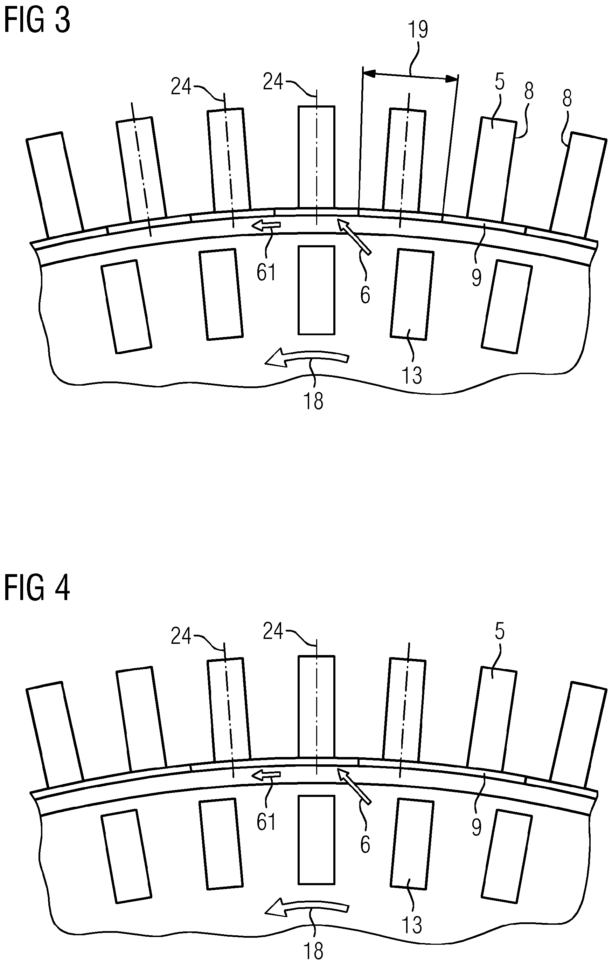

FIG 3 zeigt nunmehr einen ähnlichen Schnitt wie FIG 1 wobei die Nuten 8 durch die erfindungsgemäße Nutabdeckung 9 versehen wurden. Damit wird die Luftströmung 6, die durch Drehung 18 des Rotors 12 entsteht nunmehr allein in eine tangentiale Komponente 61 umgeleitet. Eine radiale Strömung 62 wird durch die komplette Abdeckung der aneinander gereihten T-oder L-förmigen Nutabdeckungen 9 vermieden.

Es bildet sich somit im Nutaustrittsbereich des Stators 2 die Verbreiterung der Nutabdeckung 9 in Umfangsrichtung und eine Erweiterung in axialer Richtung aus.

Die Nutabdeckungen 9 weisen dabei grundsätzlich folgenden Aufbau auf. Zunächst sind die Nutabdeckungen 9 aus elektrisch isolierendem Material, wie z.B. Kunststoff.

Des Weiteren weist eine Nutabdeckung 9 einen Nutbereich 22 und einen Nutaußenbereich 23 auf. Der Nutbereich 22 deckt in axialer Richtung zumindest die Nut 8 des Stators 2 im Blechpaket 3 ab. Der Nutaußenbereich 23 erstreckt sich in Drehrichtung 18 und unterbindet - zusammen mit anderen Nutaußenbereichen 23 benachbarter Nutabdeckungen 9 - die radiale Luftströmung 62.

FIG 3 zeigt dabei konkret eine T-förmige Ausgestaltung einer Nutabdeckung 9, wobei sich der Nutaußenbereich 23 in Drehrichtung 18 bzw. Umfangsrichtung ausgehend von der Nutmitte 24 jeweils ca. eine halbe Nutteilung 19 erstreckt.

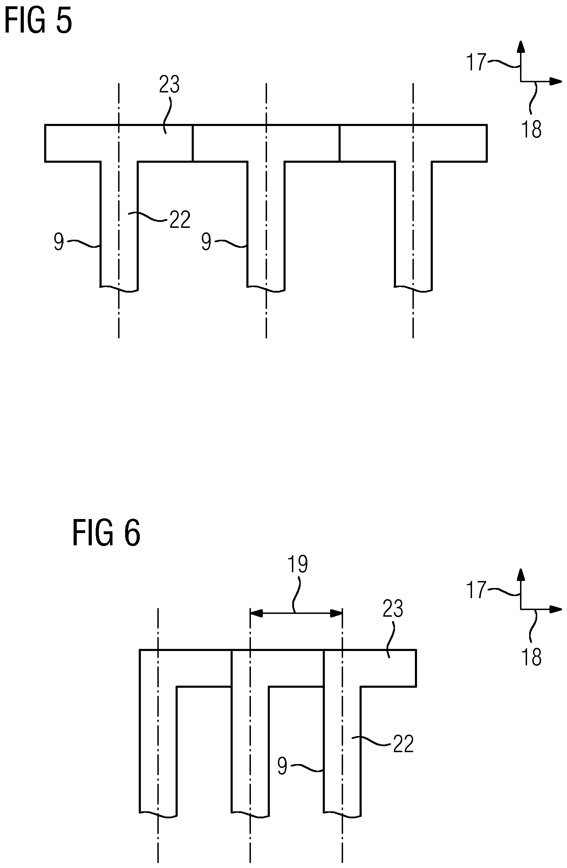

Dies ist prinzipiell auch in FIG 5 dargestellt. Da die Nutabdeckungen 9 axial in die Nut 8 eingesetzt werden, sind bei dieser Ausführungsform pro Nut 8 des Stators 2 zwei Nutabdeckungen 9 vorzusehen sind, um sowohl die eine als auch die andere Stirnseite des Stators 2 abdecken zu können. Die Nutabdeckungen 9 überlappen oder stoßen sich dabei in der Nut 8 mit ihren Nutbereichen 22 aneinander.

Auch die L-förmigen Nutabdeckungen 9 gemäß FIG 6 werden ebenso eingesetzt. Da die Nutabdeckungen 9 axial in die Nut 8 eingesetzt werden, sind bei dieser Ausführungsform pro Nut 8 des Stators 2 zwei Nutabdeckungen 9 vorzusehen sind, um sowohl die eine als auch die andere Stirnseite des Stators 2 abdecken zu können. Die Nutabdeckungen 9 überlappen oder stoßen sich dabei in der Nut 8 mit ihren Nutbereichen 22 aneinander.

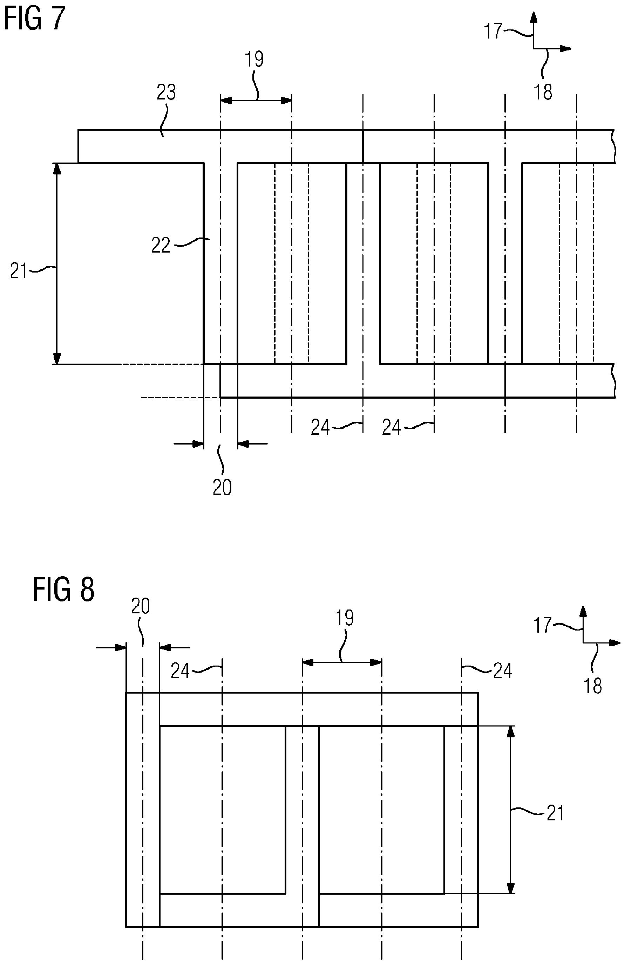

Um pro Nut 8 nur eine Nutabdeckung 9 vorsehen zu müssen, sind Nutabdeckungen 9 gemäß FIG 4, 7 und FIG 8 geeignet. Die Nutabdeckungen 9 übergreifen mit ihren Nutaußenbereichen 23 zwei oder mehrere Nutteilungen 19, unabhängig davon ob sie T-förmig oder L-förmig ausgeführt sind. Dabei können nun die Nutabdeckungen 9 in Umfangrichtung betrachtet von beiden Stirnseiten wechselnd eingeschoben werden. Der Nutbereich 22 einer Nutabdeckung 9 deckt somit die ganze Nut 8, bzw. den Nutschlitz dieser Nut 8 ab.

Grundsätzlich sind auch Kombinationen von unterschiedlichen T- und L-förmigen Nutabdeckungen 9 gemäß FIG 5 bis FIG 8 innerhalb eines Stators 2 möglich. Ebenso sind Nutabdeckungen 9 mit in Umfangsrichtung betrachtet unterschiedlichen Ersteckungen der Nutaußenbereiche 23 vorstellbar. Eine mögliche Ausführung wäre dabei eine Nutabdeckung 9 mit einem Nutaußenbereich 23, der sich in Drehrichtung 18 drei Nutteilungen 24 erstreckt und in die andere Richtung nur eine Nutteilung 24 erstreckt.

Entscheidend ist dabei immer, dass die Spalte an der Stirnseite des Stators 2, aufgrund des Austritts der Leiterstäbe aus dem Blechpaket durch die Nutaußenbereiche 23 der Nutabdeckungen 9 geschlossen werden. Dies wird insbesondere mit einer axialen Erstreckung der Nutaußenbereiche 23 bis zur Innenkante Kurzschlussring 14 bzw. dem Abstand Kurzschlussring zur Stirnseite Rotor 12 erreicht.

Eine derartige Anordnung eignet sich vor allem für schnelldrehende Asynchronmaschinen, wobei dort der Kurzschlussring 14 der Rotoren 12 zu der Stirnseite des Blechpaketes des Rotors 12 axial beabstandet ist und wobei im Stator 2 Leiterstäbe angeordnet sind, die zu dementsprechend tonalen Geräuschen aufgrund der radialen Komponenten 62 führen können. Dies wird nun erfindungsgemäß vermieden, was zu einem verbreiterten Einsatzgebiet der Asynchronmaschine in der Industrie und bei den Traktionsfahrzeugen führt.

## Patentansprüche

1. Dynamoelektrische rotatorische Maschine (1) mit
- einem Stator (2), der ein in Nuten (8) angeordnetes Wicklungssystem (5) aufweist, dass an den Stirnseiten eines Blechpakets (3) des Stators (2) jeweils einen Wickelkopf (7) aufweist,
- einen Rotor (12) mit einem Kurzschlusskäfig, der mittels elektromagnetischer Wechselwirkung über einen Luftspalt (10) mit dem bestromten Wicklungssystem (5) des Stators (2) diesen in Drehung um eine Achse (17) versetzt,
- einer Nutabdeckung (9) zwischen Wicklungssystem (5) und Luftspalt (10), die axial über die Stirnseiten des Stators (2) ragt und in diesem Bereich axial außerhalb dieser Stirnseiten dort in die benachbarten Nutabdeckungen (9) nahezu stufenlos übergeht.

2. Dynamoelektrische Maschinen nach Anspruch 1, **dadurch gekennzeichnet, dass** die Nutabdeckung (9) pro Nut (8) zweiteilig ausgeführt ist, derart dass jeder Teil T-förmig oder L-förmig ausgeführt ist und von den jeweiligen Stirnseiten des Stators (2) in die Nut (8) einsetzbar ist.

3. Dynamoelektrische rotatorische Maschine (1) nach Anspruch 1, **dadurch gekennzeichnet, dass** sich die Nutabdeckungen (9) axial über die gesamte Länge (21) des Blechpakets des Stators (2) erstrecken sich und kopfseitig T-oder L-förmig ausgeführt sich und sich in Umfangsrichtung über mindestens zwei Nutteilungen (19) erstrecken, wobei die Nutabdeckung (9) abwechselnd von den Stirnseiten des Stators (2) einschiebbar ist.

4. Dynamoelektrische rotatorische Maschine (1) nach einem der vorhergehenden Ansprüche, **dadurch gekennzeichnet, dass** die Nutabdeckung (9) aus Isoliermaterial ist.

5. Dynamoelektrische rotatorische Maschine (1) nach Anspruch 4, **dadurch gekennzeichnet, dass** die Nutabdeckung (9) einstückig aus Isoliermaterial ist.
